# EUROPÄISCHE PATENTSCHRIFT

(11) **EP 2 063 982 B1**
(45) Veröffentlichungstag und Bekanntmachung des Hinweises auf die Patenterteilung: **01.12.2010**
(21) Anmeldenummer: 07818214.4
(22) Anmeldetag: 18.09.2007
(51) Int. Cl.: B01D 71/00, B01D 71/02

(54) **GASTRENN-MEMBRAN**
GAS SEPARATION MEMBRANE
MEMBRANE DE SÉPARATION DES GAZ

(30) Priorität: 19.09.2006 DE 102006044635
(43) Veröffentlichungstag der Anmeldung: 03.06.2009
(73) Patentinhaber: GKSS-Forschungszentrum Geesthacht GmbH, 21502 Geesthacht (DE)
(72) Erfinder: QIU, Jun, 6003 BW Weert (NL); PEINEMANN, Klaus-Viktor, 21502 Geesthacht (DE); WIND, Jan, 21481 Lauenburg (DE); PINGEL, Holger, 21502 Geesthacht (DE)
(74) Vertreter: Seemann, Ralph
(86) Internationale Anmeldenummer: PCT/EP2007/008112
(87) Internationale Veröffentlichungsnummer: WO 2008/034581

(56) Entgegenhaltungen:
- EP-A- 1 086 737
- WO-A-89/04201
- WO-A-99/22852
- WO-A-03/072232
- DE-A1- 19 916 802
- FR-A- 2 776 287
- FR-A- 2 786 710
- US-A- 4 609 468
- US-B1- 6 503 295

## Beschreibung

Die Erfindung betrifft eine Membran zur Gastrennung, ein Verfahren zur Herstellung einer entsprechenden Membran, ein Gastrennmodul mit einer entsprechenden Membran sowie ein Verfahren zum Betrieb eines solchen Gastrennmoduls.

Für industrielle Anwendungen besteht ein steigender Bedarf an mit Sauerstoff angereicherter Luft, insbesondere mit einem Anteil zwischen 25 % bis 35 %. Auf diese Weise lassen sich Verbrennungsprozesse effizienter durchführen. Für die Sauerstoffanreicherung bieten sich Membranverfahren an. Die verwendeten Membranen sind semi-permeable selektive Barrieren, die zum Trennen von gasförmigen oder dampfförmigen Mehrstoffgemischen dienen. Die bevorzugt durch die Membran durchtretenden Stoffe sind dabei im Permeat angereichert, und im Retentat befinden sich die von der Membran zurückgehaltenen Stoffe. Die Stofftrennung erfolgt durch die unterschiedlichen Permeationsraten der Gase. Ein Maß für die Fähigkeit einer Membran, zwei Gase zu trennen, ist das Verhältnis ihrer Permeabilitäten, das als Selektivität bezeichnet wird. Besonders wichtig für die Wirtschaftlichkeit einer Membrantechnologie ist die Verwendung einer Membran mit einem hohen Trennfaktor und einem hohen Gasfluss, d.h. mit hoher Selektivität und hoher Permeabilität. Der Trennfaktor ist eine Materialeigenschaft, die beispielsweise durch die Entwicklung spezieller Polymere erhöht werden kann, während der Gasfluss eine Membraneigenschaft ist, die unter anderem dadurch verbessert wird, dass die effektive Dicke einer selektiven Trennschicht verringert wird. Allerdings kann eine Schicht nicht beliebig dünn auf eine Trägermembran aufgetragen werden, ohne Defekte in dieser Schicht zu provozieren.

Darüber hinaus sollte bei einer langfristigen Nutzung einer Membran eine möglichst niedrige Fouling-Rate gewährleistet sein, d.h. eine geringe Ablagerung gelöster Substanzen an der äußeren Membranoberfläche. Zudem ist eine kostengünstige Produktion ein wichtiger Gesichtspunkt bei der Entwicklung von Membranen.

Bereits bekannte Membranen sind entweder nicht selektiv genug für eine Sauerstoff/Stickstoff-Trennung oder sie weisen einen zu geringen Durchsatz auf, was zu große Membranflächen erforderlich macht. Eine Silikon-Kompositmembran mit einer Schichtdicke von 1 µm weist beispielsweise einen Sauerstofffluss von 1,6 m³ / m² h bar auf, die Sauerstoff/Stickstoff-Selektivität beträgt aber nur 2,1. Das ist für die meisten industriellen Anwendungen zu gering. Membranen aus anderen Polymeren weisen zwar eine höhere Selektivität auf, der Sauerstofffluss liegt aber in der Regel weit unterhalb von 0,2 m³ / m² h bar, was zu große Membranflächen erforderlich macht, vgl. hierzu R. Baker: "Membrane Technology in the Chemical Industrie: Future Directions", Wiley-VCH, Weinheim, 2001, Seiten 39-67.

Des Weiteren wurde versucht, Membranen mit gemischter Matrix dahingehend weiter zu entwickeln, dass Zeolithe, insbesondere Silicalite, in Zelluloseacetat eingebracht wurden. Damit wurde die Sauerstoff/Stickstoff-Selektivität von 3,0 auf 3,6 gesteigert, vgl. S. Kulprathipanja: "Mixed Matrix Membrane Development", Annals of the New York Academy of Sciences, 2003, Seiten 361-369.

M. Jia et al. berichteten in "Molecular sieving effect of the zeolitefilled silicone rubber membranes in gas permeation", Journal of Membrane Science, 57, 1991, Seiten 289-296, über Membranen mit gemischter Matrix aus Silicalit und PDMS (Polydimethylsiloxan), die eine leicht erhöhte Sauerstoff/Stickstoff-Selektivität aufweisen.

Aus US-B-6 562 110 sind Membranen mit gemischter Matrix bekannt, die aus Kohlenstoff-Molekularsieben und Polyimiden hergestellt sind und die ebenfalls eine verbesserte Kombination von Permeabilität und Selektivität aufweisen.

Die oben beschriebenen Membranen sind nicht geeignet für den Einsatz im industriellen Maßstab. Als Nachteil erweist sich beispielsweise, dass die Membraneigenschaften durch den Einbau weiterer Füllstoffe nicht im erforderlichen Maß verbessert werden konnten. Des Weiteren tritt als Nachteil auf, dass eine reproduzierbare Membranfertigung nicht möglich ist, da der Füllstoff nicht gleichmäßig in der Membran verteilt ist. Wenn die Füllstoff-Partikel darüber hinaus zu groß ausfallen, erhält man Membranen von zu hoher Dicke, die keine ausreichende Permeabilität mehr gewährleisten.

Außerdem ist in WO-A-89/04201 eine zusammengesetzte Membran aus Polymethylmethacrylatgemischen beschrieben. Die Membran weist eine poröse Trägerschicht auf und eine auf der Trägerschicht befindliche Trennschicht, die aus einem Gemisch von Poly(methylmethacrylat) oder einem Copolymer desselben und einem Zellulosederivat hergestellt ist.

Die Aufgabe der vorliegenden Erfindung besteht darin, eine Membran zur Gastrennung vorzustellen, die eine hohe Permeabilität und eine hohe Selektivität aufweist, darüber hinaus einfach und kostengünstig herzustellen ist, so dass eine industrielle Verwendung möglich ist. Des Weiteren ist es Aufgabe der Erfindung, ein Verfahren zur Herstellung einer solchen Membran, ein Gastrennmodul mit einer entsprechenden Membran sowie ein Verfahren zum Betrieb eines solchen Gastrennmoduls zur Verfügung zu stellen.

Die Aufgabe wird durch eine Membran zur Gastrennung gelöst, die umfasst:
- eine poröse Trägerschicht aus Polymer oder anorganischem Material, insbesondere keramischem Material,
- eine Trennschicht, umfassend eine Mischung aus Saccharid-Derivaten und Homopolymer, insbesondere umfassend Ethylzellulose, Zelluloseacetat oder Poly-4-Methyl-1-Penten,
- wobei die Saccharid-Derivate eine zyklische Struktur mit fünf oder sechs Ringatomen oder eine lineare Struktur aufweisen oder Monosaccharid-Derivate sind, die über Glykosid-bindungen verbunden sind, wobei die Anzahl der auf diese Weise verbundenen Monosaccharide zwischen 2 und 1.000 liegt,
- wobei die Saccharid-Derivate aus Silylierung der Familie von Sacchariden mit zyklischer Struktur mit fünf oder sechs Ringatomen oder linearer Struktur stammen, wobei die Familie von Sacchariden Monosaccharose, Disaccharose, Trisaccharose oder Dextrin umfasst,
   wobei Monosaccharose wenigstens ein Mitglied aus der Gruppe von Arabinose, Lyxose, Ribose, Desoxyribose, Xylose, Ribulose, Xylulose, Allose, Altose, Galactose, Glucose, Gulose, Idose, Mannose, Tagatose, Fructose, Mannoheptulose, Sedoheptulose, Octolose, 2-Keto-3-Deoxy-Manno-Octonat und Sialose umfasst,
   und wobei Disaccharose wenigstens ein Mitglied aus der Gruppe von Sucrose, Lactose, Maltose oder Trehalose umfasst
   und wobei Dextrin wenigstens ein Mitglied aus der Gruppe von α-Zyklodextrin, β-Zyklodextrin, γ-Zyklodextrin und Dextrinen verschiedener Molekulargewichte, die zwischen 900 und 1.000.000 Dalton liegen, umfasst
   und wobei die Saccharid-Deriate durch Silylierung aus der Familie der Saccharide von von hohem Molekulargewicht gewonnen sind, wobei Zellulose, Stärke und Glykogen eingeschlossen sind,
   oder
- wobei die Saccharid-Derivate aus Acetatisierung der Familie von Sacchariden mit zyklischer Struktur mit fünf oder sechs Ringatomen oder linearer Struktur stammen,
   wobei die Familie von Sacchariden Monosaccharose, Disaccharose, Trisaccharose oder Dextrin umfasst,
   wobei Monosaccharose wenigstens ein Mitglied aus der Gruppe von Arabinose, Lyxose, Ribose, Desoxyribose, Xylose, Ribulose, Xylulose, Allose, Altose, Galactose, Glucose, Gulose, Idose, Mannose, Tagatose, Fructose, Mannoheptulose, Sedoheptulose, Octolose, 2-Keto-3-Deoxy-Manno-Octonat und Sialose umfasst,
   und wobei Disaccharose wenigstens ein Mitglied aus der Gruppe von Sucrose, Lactose, Maltose oder Trehalose umfasst
   und wobei Dextrin wenigstens ein Mitglied aus der Gruppe von α-Zyklodextrin, β-Zyklodextrin, γ-Zyklodextrin und Dextrinen verschiedener Molekulargewichte, die zwischen 900 und 1.000.000 Dalton liegen, umfasst
   und wobei die Saccharid-Derivate durch Acetatisierung aus der Familie der Saccharide von von hohem Molekulargewicht gewonnen sind, wobei Stärke und Glykogen eingeschlossen sind.

Dabei hat sich überraschenderweise herausgestellt, dass der Sauerstofffluss durch eine solche Membran erheblich ansteigt, wenn der Membran Saccharid-Derivate zugesetzt werden.

In einer bevorzugten Ausführungsform der Membran enthält die Membran 10 bis 50 Gew.% an Saccharid-Derivaten.

In einer weiteren vorteilhaften Ausführungsform weisen die Saccharid-Derivate Strukturen der Formeln STR1, STR2 oder STR3 auf, wobei: 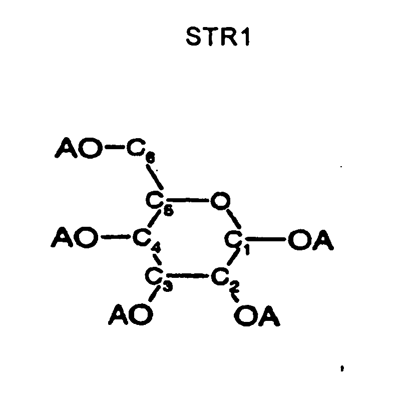 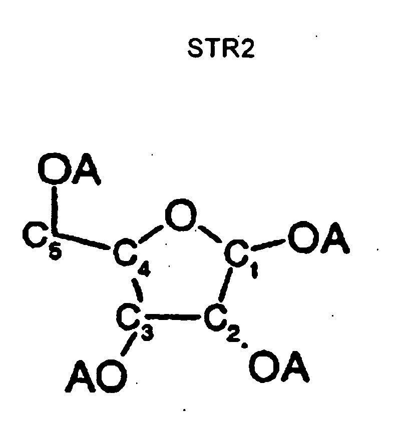 und 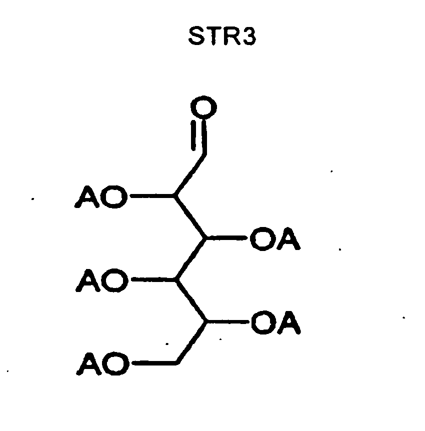 entsprechen,
wobei A Wasserstoff, eine silylhaltige Substanz oder eine acetathaltige Substanz der Formeln STR4 oder STR5 bezeichnet, wobei 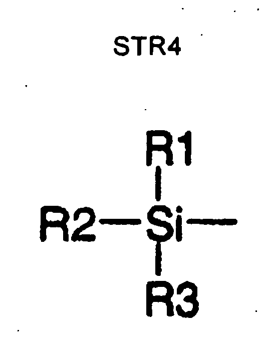 und 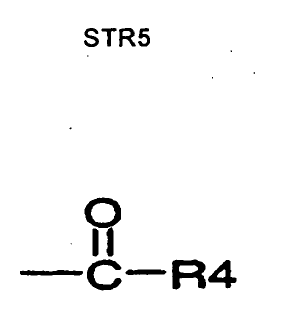 entsprechen,
wobei R₁, R₂, R₃ Wasserstoff, ein Alkyl, Alkenyl, Aryl, Alkylaryl oder Arylalkyl mit 1 bis 10 Kohlenstoffatomen bezeichnen und wobei R₄ ein Alkyl, Alkenyl, Aryl, Alkylaryl oder Arylalkyl mit 1 bis 10 Kohlenstoffatomen bezeichnet.

In einer besonders bevorzugten Ausführungsform der Membran enthalten die über Glykosidbindungen verbundenen Monosaccharid-Derivate C₁-C₄-, C₁-C₁ - oder C₁-C₆ -Bindungen.

Erfindungsgemäß enthält die Membran Saccharid-Derivate, die aus Acetatisierung oder Silylierung der Familie von Sacchariden mit zyklischer Struktur mit fünf oder sechs Ringatomen oder linearer Struktur stammen, wobei Monosaccharose, Disaccharose, Trisaccharose oder Dextrin umfasst sind.

Im Fall von Monosaccharose ist dabei vorzugsweise wenigstens ein Mitglied aus der Gruppe von Arabinose, Lyxose, Ribose, Desoxyribose, Xylose, Ribulose, Xylulose, Allose, Altose, Galactose, Glucose, Gulose, Idose, Mannose, Tagatose, Fructose, Mannoheptulose, Sedoheptulose, Octolose, 2-Keto-3-Deoxy-Manno-Octonat und Sialose umfasst.

Im Fall von Disaccharose ist dabei bevorzugt wenigstens ein Mitglied aus der Gruppe von Sucrose, Lactose, Maltose oder Trehalose umfasst.

Im Fall von Dextrin gilt, dass dieses bevorzugt wenigstens ein Mitglied aus der Gruppe von α-Zyklodextrin, β-Zyklodextrin, γ-Zyklodextrin und Dextrinen verschiedener Molekulargewichte, die zwischen 900 und 1.000.000 Dalton liegen, umfasst.

Ferner werden die Saccharid-Derivate durch Acetatisierung oder Silylierung aus der Familie der Saccharide von hohem Molekulargewicht gewonnen, wobei Zellulose, Stärke und Glykogen eingeschlossen sein können.

In einer weiteren bevorzugten Ausführungsform der Membran ist vorgesehen, dass die Saccharid-Derivate zu 75 bis 100 Gew.% aus Acetatisierung oder Silylierung gewonnen sind, wobei die Saccharid-Derivate homogen in einem gängigen organischen Lösemittel mit dem Homopolymer gelöst sind.

Die Saccharid-Derivate weisen dabei zweckmäßigerweise einen vernachlässigbar geringen Dampfdruck auf und sind mindestens temperaturstabil bei über 100°C. Auf diese Weise wird eine hohe Lebensdauer und größere Beanspruchbarkeit der Membran gewährleistet.

In einer weiteren vorteilhaften Ausführungsform der Membran ist vorgesehen, dass die Trennschicht 5 bis 60 Gew.% an Saccharid-Derivaten enthält.

Besonders vorteilhaft für die Trägerschicht ist es, wenn sie wenigstens ein Mitglied aus der Gruppe von Polysulfon, Polyethersulfon, Polphenylsulfon, Polyacrylonitril, Zelluloseacetat, Polyetherimid oder Polyimid umfasst oder insbesondere aus einem oder mehreren dieser Materialien besteht.

Die Aufgabe der Erfindung wird weiterhin gelöst durch ein Verfahren zur Herstellung einer Membran mit den oben ausgeführten Eigenschaften, das die folgenden Schritte umfasst:
- Herstellen einer homogenen Lösung mit den Saccharid-Derivaten und dem Homopolymer in einem geeigneten Lösemittel,
- Gießen der homogenen Lösung auf die Trägerschicht.

Außerdem wird die Aufgabe durch ein Gastrennmodul mit einer der oben beschriebenen Membranen sowie ein Verfahren zum Betrieb eines solchen Gastrennmoduls gelöst.

Mit besonderem Vorteil wird das erfindungsgemäße Gastrennmodul für die Sauerstoffanreicherung eines Gases verwendet.

Die Erfindung wird nachstehend ohne Beschränkung des allgemeinen Erfindungsgedankens anhand von Ausführungsbeispielen beschrieben, auf die bezüglich der Offenbarung aller im Text nicht näher erläuterten erfindungsgemäßen Einzelheiten ausdrücklich verwiesen wird.

### Beispiel 1

### Herstellung von TMSS (Trimethylsilylsaccharose)

Die Saccharose ist erhältlich von Aldrich, HMDS (Hexamythyldisilazan) und alle Lösemittel werden von Merck bezogen.

Vor ihrer Verwendung wird die Saccharose im Vakuum bei 100°C über Nacht getrocknet. 3 g Saccharose werden mit 120 ml DMAc (Dimethylacetamid) in einem Rundkolben mit 250 ml Fassungsvermögen gemischt und bei 80°C unter Stickstoff-Schutzatmosphäre gerührt. 30 ml HMDS werden über einen Tropftrichter tröpfchenweise über 3 h zugegeben. Dann wird die Mischung über 9 h kontinuierlich gerührt, um den Grad der Silylierung zu erhöhen. Die Mischung lässt man langsam auf Raumtemperatur abkühlen. Anschließend wird die Mischung in einen Trenntrichter gegossen und zu 400 ml Eiswasser gegeben. Dann werden 150 ml Hexan zugefügt, um das Produkt zu extrahieren. Das im Hexan extrahierte Produkt wird mit trockenem Natriumsulfat getrocknet und einem Rotationsverdampfer zugeführt, um das Lösemittel zu entfernen. Das Rohprodukt wird nun unter Vakuumbedingungen bei Raumtemperatur für 24 h getrocknet. Das transparente flüssige Produkt wird in seinen Eigenschaften durch NMR (Nuklear-Magnet-Resonanzverfahren) und TGA (Thermogravimetrie) charakterisiert. Der allgemeine Grad an Silylierung beträgt 84 % mit einer guten Reproduzierbarkeit, was sich über eine 1H-NMR Spektroskopie nach Nouvel et al. schätzen lässt. Die thermische Stabilität von TMSS bleibt bei bis zu 140°C erhalten, gemessen über TGA-Analyse. Die Dichte (Masse pro Volumen) von TMSS liegt bei 0,97-0,99 g/cm³. Die Löslichkeit von TMSS wurde für hochpolare Lösemittel wie Methanol bis hin zu hoch unpolaren Lösemitteln wie Zyklohexan überprüft und deutet auf eine große Bandbreite möglicher Lösungsmittel für TMSS hin.

### Beispiel 2

### Zubereitung einer Membran mit gemischter Matrix aus einem Ethylzellulose/TMSS (Trimethytsilylsaccharose)-Film

EC (Ethylzellulose) mit einem Ethoxylgehalt von 46 % ist über Aldrich zu beziehen. 2 Gew./vol. % EC-Polymerlösung wird in trockenem Chloroform in einem Glasgefäß bei Raumtemperatur zubereitet. Anschließend werden die verschiedenen Mengen von TMSS der EC-Polymerlösung zugegeben. Die Gießlösung aus der transparenten homogenen Polymermischung wird durch Rühren über Nacht und Filtration vor dem Gießen zubereitet. Dann wird der Film auf einen Aluminiumring gegossen, der durch eine staubfreie, trockene und flache Glasplatte gestützt wird. Anschließend lässt man das Lösemittel langsam innerhalb eines Tages verdampfen, indem man eine Glasabdeckung bei Raumtemperatur darübergibt. Nach der Verdampfung des Lösemittels wird der Film weiter im ölfreien Vakuum über Nacht getrocknet, um verbleibendes Lösemittel vollständig zu entfernen. Die Entfernung des Films von der Glasplatte wird durch Fluten mit Wasser ausgeführt und anschließendem erneuten Trocknen im ölfreien Vakuum über Nacht. Alle EC/TMSS-Kompositfilme sind transparent und ohne besondere Eigenschaften im Hinblick auf optische Prüfverfahren. Sie weisen eine vorzügliche Mischbarkeit zwischen EC und dem Füllstoff TMSS auf, vgl. D.R. Paul und C.B. Bucknall, Hrg.:"Polymer Blends: Formulation and Performance", John Wiley & Sons, 2000. Die Dicke des Films variiert zwischen 60 µm und 80 µm, gemessen über ein digitales Mikrometer mit einer Genauigkeit von ± 1 µm. Schließlich wird der Film in runde Scheiben mit einem Durchmesser von 4,6 cm für eine Testzelle zur Messung von Zeitverzögerungen geschnitten.

### Beispiel 3

Eine Reihe von EC/TMSS-Filmen wird nach Beispiel 2 zubereitet, und die Gaspermeabilitätskoeffizienten sowie das Beladungsverhältnis mit einem Füllstoff sind in Tabelle 1 dargestellt.

**Tabelle 1:**

| Permeabilität von EC-Membranen mit verschiedenen Anteilen an TMSS | | | | | | |
|---|---|---|---|---|---|---|
| Permeabilität (Barrer*) | He | H₂ | O₂ | N₂ | CH₄ | CO₂ |
| EC | 40,2 | 56,0 | 11,8 | 3,48 | 7,11 | 70.9 |
| EC+TMSS (11,4 Vol.%) | 48,7 | 67,5 | 14,6 | 4,30 | 9,0 | 86,3 |
| EC+TMSS (26,4 Vol.%) | 51,5 | 70,7 | 16,8 | 4,97 | 10,4 | 88,0 |

| | | | | | | |
|---|---|---|---|---|---|---|
| *1 Barrer = 10⁻¹⁰ cm³ (STP)•cm/(cm²•s•cm HG) STP: Standarddruck und -temperatur | | | | | | |

### Beispiel 4

Eine Reihe von EC/TMSG (Trimethylsilylglukose)-Filmen wird nach dem Herstellungsverfahren in Beispiel 2 zubereitet, und die Gaspermeabilitätskoeffizienten und das Beladungsverhältnis mit einem Füllstoff sind in Tabelle 2 dargestellt.

**Tabelle 2:**

| Permeabilität von EC-Membranen mit verschiedenen Anteilen an TMSG | | | | | | |
|---|---|---|---|---|---|---|
| Permeabilität (Barrer*) | He | H₂ | O₂ | N₂ | CH₄ | CO₂ |
| EC | 40,2 | 56,0 | 11,8 | 3.48 | 7,11 | 70,9 |
| EC+TMSG (11,4 Vol.%) | 51,9 | 72,6 | 16,8 | 4,92 | 10,9 | 94,0 |
| EC+TMSG (26,4 Vol.%) | 53,5 | 73,3 | 18,2 | 5,31 | 11,7 | 90,0 |
| EC+TMSG (43,4 Vol.%) | 70,9 | 99,3 | 30,5 | 9,94 | 22,8 | 142 |
| EC+TMSG (65,9 Vol.°%) | 109 | 162 | 58,6 | 21,5 | 58,5 | 286 |

| | | | | | | |
|---|---|---|---|---|---|---|
| *1 Barrer = 10⁻¹⁰ cm³ (STP)•cm/(cm²•s•cm HG) STP: Standarddruck und -temperatur | | | | | | |

### Beispiel 5

Eine Reihe von CA (Zelluloseacetat) / TMSG-Filmen wird nach dem Herstellungsprozess in Beispiel 2 zubereitet, wobei als Lösemittel THF (Tetrahydrofuran) anstelle von Chloroform verwendet wird, und der Gaspermeabilitätskoeffizient und die Selektivität des Gases gegenüber Stickstoff sowie das Beladungsverhältnis mit einem Füllstoff sind in Tabelle 3 dargestellt.

**Tabelle 3:**

| Permeabilität von CA-Membranen mit verschiedenen Anteilen an TMSG | | | | | | |
|---|---|---|---|---|---|---|
| Permeabilität (Barrer*) | He | H₂ | O₂ | N₂ | CH, | CO₂ |
| CA | 15,5 | 12,75 | 1,10 | 0,26 | 0.31 | 7,14 |
| CA+TMSG (10,1 Gew.%) | 21,22 | 19,09 | 1,96 | 0,45 | 0,58 | 11,60 |
| CA+TMSG (25,8 Gew.%) | 30,57 | 30,21 | 3,74 | 0,84 | 1,16 | 20,36 |

| | | | | | | |
|---|---|---|---|---|---|---|
| *1 Barrer = 10⁻¹⁰ cm³ (STP)•cm/(cm²•s•cm HG) STP: Standarddruck und -temperatur | | | | | | |

### Beispiel 6

### Herstellung einer Membran mit gemischter Matrix aus Ethylzellulose/TMSS-Kompositfilmen

Eine mikroporöse PAN (Polyacrylonitril)-Membran wird zunächst mit einer dünnen querverbundenen PDMS (Polydimethylsiloxan)-Schicht bedeckt. In einem zweiten Schritt wird der PDMS-bedeckte Träger in ein Tauchbad gedippt. Die Deckschicht besteht aus 0,2 bis 0,3 Gew.% Ethylzellulose und 0,04 bis 0,12 Gew.% TMSS in Toluen.

### Beispiel 7

Eine Reihe von EC/TMSS Kompositfilmen wird nach Beispiel 6 zubereitet, und die Sauerstoffpermeabilität, die Stickstoffpermeabilität und die Sauerstoff/Stickstoff-Selektivität sowie das Beladungsverhältnis mit einem Füllstoff sind in Tabelle 4 dargestellt. Die Kompositfilme wurden mit einer Gerätschaft, hergestellt im GKSS-Forschungszentrum, bei Druckerhöhung getestet.

**Tabelle 4:**

| Sauerstoffpermeabilität, Stickstoffpermeabilität und Sauerstoff/Stickstoff Selektivität bei EC/TMSS Kompositmembranen | | | |
|---|---|---|---|
| | Permeabilität | | |
| Bestandteile | | | Selektivität |
| | (m³/m²h bar) | | |
| | O₂ | N₂ | O₂/N₂ |
| EC 0,2 % | 0,93 | 0,35 | 2,67 |
| EC 0,3 % | 0,96 | 0,33 | 2,94 |
| EC (0,2 %) + TMSS (0,04 %) | 1,03 | 0,34 | 3,05 |
| EC (0,2 %) + TMSS (0,08 %) | 1,21 | 0,41 | 2,96 |
| EC (0,3 %) + TMSS (0,06 %) | 0,71 | 0,22 | 3,28 |
| EC (0,3 %) + TMSS (0,12 %) | 0,86 | 0,28 | 3,08 |

## Patentansprüche

1. Membran zur Gastrennung, umfassend:
- eine poröse Trägerschicht aus Polymer oder anorganischem Material, insbesondere keramischem Material,
- eine Trennschicht, umfassend eine Mischung aus Saccharid-Derivaten und Homopolymer, insbesondere umfassend Ethylzellulose, Zelluloseacetat oder Poly-4-Methyl-1-Penten,
- wobei die Saccharid-Derivate eine zyklische Struktur mit fünf oder sechs Ringatomen oder eine lineare Struktur aufweisen oder Monosaccharid-Derivate sind, die über Glykosidbindungen verbunden sind, wobei die Anzahl der auf diese Weise verbundenen Monosaccharide zwischen 2 und 1.000 liegt,
- wobei die Saccharid-Derivate aus Silylierung der Familie von Sacchariden mit zyklischer Struktur mit fünf oder sechs Ringatomen oder linearer Struktur stammen, wobei die Familie von Sacchariden Monosaccharose, Disaccharose, Trisaccharose oder Dextrin umfasst,
wobei Monosaccharose wenigstens ein Mitglied aus der Gruppe von Arabinose, Lyxose, Ribose, Desoxyribose, Xylose, Ribulose, Xylulose, Allose, Altose, Galactose, Glucose, Gulose, Idose, Mannose, Tagatose, Fructose, Mannoheptulose, Sedoheptulose, Octolose, 2-Keto-3-Deoxy-Manno-Octonat und Sialose umfasst,
und wobei Disaccharose wenigstens ein Mitglied aus der Gruppe von Sucrose, Lactose, Maltose oder Trehalose umfasst
und wobei Dextrin wenigstens ein Mitglied aus der Gruppe von α-Zyklodextrin, β-Zyklodextrin, γ-Zyklodextrin und Dextrinen verschiedener Molekulargewichte, die zwischen 900 und 1.000.000 Dalton liegen, umfasst
und wobei die Saccharid-Deriate durch Silylierung aus der Familie der Saccharide von von hohem Molekulargewicht gewonnen sind, wobei Zellulose, Stärke und Glykogen eingeschlossen sind,
oder
- wobei die Saccharid-Derivate aus Acetatisierung der Familie von Sacchariden mit zyklischer Struktur mit fünf oder sechs Ringatomen oder linearer Struktur stammen, wobei die Familie von Sacchariden Monosaccharose. Disaccharose, Trisaccharose oder Dextrin umfasst,
wobei Monosaccharose wenigstens ein Mitglied aus der Gruppe von Arabinose, Lyxose, Ribose, Desoxyribose, Xylose, Ribulose, Xylulose, Allose, Altose, Galactose, Glucose, Gulose, Idose, Mannose, Tagatose, Fructose, Mannoheptulose, Sedoheptulose, Octolose, 2-Keto-3-Deoxy-Manno-Octonat und Sialose umfasst,
und wobei Disaccharose wenigstens ein Mitglied aus der Gruppe von Sucrose, Lactose, Maltose oder Trehalose umfasst
und wobei Dextrin wenigstens ein Mitglied aus der Gruppe von α-Zyklodextrin, β-Zyklodextrin, γ-Zyklodextrin und Dextrinen verschiedener Molekulargewichte, die zwischen 900 und 1.000.000 Dalton liegen, umfasst
und wobei die Saccharid-Derivate durch Acetatisierung aus der Familie der Saccharide von hohem Molekulargewicht gewonnen sind, wobei Stärke und Glykogen eingeschlossen sind.

2. Membran nach Anspruch 1, **dadurch gekennzeichnet, dass** die Membran 10 bis 50 Gew.% an Saccharid-Derivaten enthält.

3. Membran nach Anspruch 1 oder 2, **dadurch gekennzeichnet, dass** die Saccharid-Derivate Strukturen der Formeln STR1, STR2 oder STR3 aufweisen, wobei: 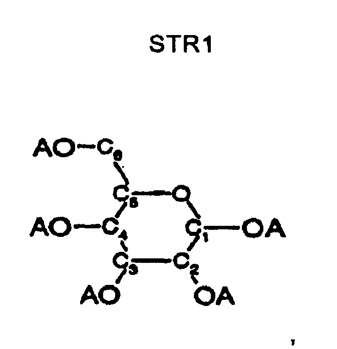 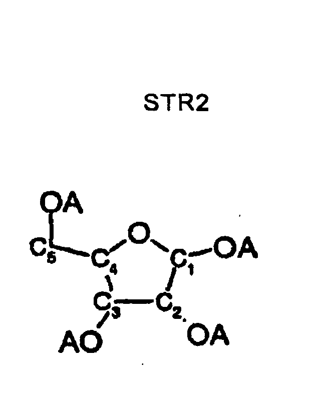 und 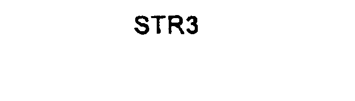 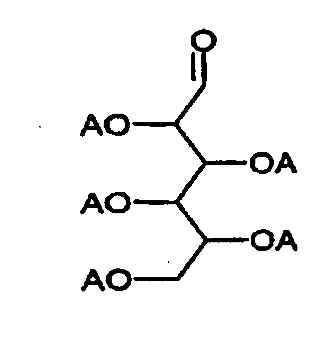 entsprechen,
wobei A Wasserstoff, eine silylhaltige Substanz oder eine acetathaltige Substanz der Formeln STR4 oder STR5 bezeichnet, wobei 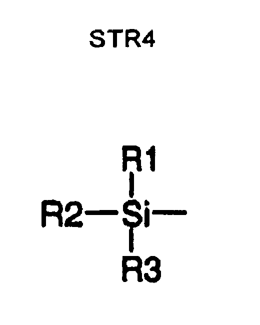 und 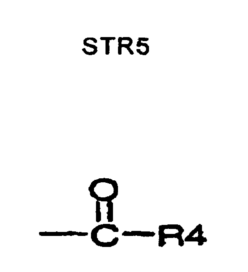 entsprechen,
wobei R₁, R₂, R₃ Wasserstoff, ein Alkyl, Alkenyl, Aryl, Alkylaryl oder Arylalkyl mit 1 bis 10 Kohlenstoffatomen bezeichnen und wobei R₄ ein Alkyl, Alkenyl, Aryl, Alkylaryl oder Arylalkyl mit 1 bis 10 Kohlenstoffatomen bezeichnet.

4. Membran nach einem der Ansprüche 1 bis 3, **dadurch gekennzeichnet, dass** die über Glykosidbindungen verbundenen Monosaccharid-Derivate C₁-C₄ -, C₁-C₁ - oder C₁-C₆ - Bindungen enthalten.

5. Membran nach einem der Ansprüche 1 bis 4, **dadurch gekennzeichnet, dass** die Saccharid-Derivate zu 75 bis 100 Gew.% aus Acetatisierung oder Silylierung gewonnen sind, wobei die Saccharid-Derivate homogen in einem organischen Lösemittel mit dem Homopolymer gelöst sind.

6. Membran nach einem der Ansprüche 1 bis 5, **dadurch gekennzeichnet, dass** die Saccharid-Derivate einen vernachlässigbar geringen Dampfdruck aufweisen und mindestens temperaturstabil bei über 100°C sind.

7. Membran nach einem der Ansprüche 1 bis 6, **dadurch gekennzeichnet, dass** die Trennschicht 5 bis 60 Gew.% an Saccharid-Derivaten enthält.

8. Membran nach einem der Ansprüche 1 bis 7, **dadurch gekennzeichnet, dass** die Trägerschicht wenigstens ein Mitglied aus der Gruppe von Polysulfon, Polyethersulfon, Polphenylsulfon, Polyacrylonitril, Zelluloseacetat, Polyetherimid oder Polyimid umfasst, insbesondere aus einem oder mehreren dieser Materialien besteht.

9. Verfahren zur Herstellung einer Membran nach einem der Ansprüche 1 bis 8, umfassend folgende Schritte:
- Herstellen einer homogenen Lösung mit den Saccharid-Derivaten und dem Homopolymer in einem geeigneten Lösemittel,
- Gießen der homogenen Lösung auf die Trägerschicht.

10. Gastrennmodul mit einer Membran nach einem der Ansprüche 1 bis 8.

11. Verfahren zum Betrieb eines Gastrennmoduls nach Anspruch 10 zur Sauerstoffanreicherung.

## Claims

1. A gas separation membrane including:
- a porous carrier layer of polymer or inorganic material, particularly ceramic material,
- a separation layer including a mixture of saccharide derivatives and homopolymer, particularly including ethyl cellulose, cellulose acetate or poly-4-methyl-1-pentene,
- wherein the saccharide derivatives have a cyclical structure with five or six ring atoms or a linear structure or are monosaccharide derivatives, which are bonded by means of glycoside bonds, wherein the number of the monosaccharides bonded in this manner is between 2 and 1000,
- wherein the saccharide derivatives are derived from silylation of the family of saccharides with a cyclical structure with five or six ring atoms or a linear structure, wherein the family of saccharides include monosaccharose, disaccharose, trisaccharose or dextrin,
wherein monosaccharose includes at least one member of the group comprising arabinose, lyxose, ribose, desoxyribose, xylose, ribulose, xylulose, allose, altose, galactose, glucose, gulose, idose, mannose, tagatose, fructose, mannoheptulose, sedoheptulose, octolose, 2-keto-3-deoxy-manno-octonate and sialose,
and wherein disaccharose includes at least one member from the group comprising sucrose, lactose, maltose or trehalose,
and wherein dextrin includes at least one member of the group comprising α-cyclodextrin, β-cyclodextrin, γ-cyclodextrin and dextrins of different molecular weights which are between 900 and 1,000,000 Dalton,
and wherein the saccharide derivatives are produced by silylation from the family of saccharides of high molecular weight, wherein cellulose, starch and glycogen are included,
or
- wherein the saccharide derivatives are derived from acetatisation of the family of saccharides with a cyclical structure with five or six ring atoms or a linear structure, wherein the family of saccharides includes monosaccharose, dysacarose, trisacarose or dextrin,
wherein monosacarose includes at least one member of the group comprising arabinose, lyxose, ribose, desoxyribose, xylose, ribulose, xylulose, allose, altose, galactose, glucose, gulose, idose, mannose, tagatose, fructose, mannoheptulose, sedoheptulose, octolose, 2-keto-3-deoxy-manno-octonate and sialose,
and wherein disaccharose includes at least one member from the group comprising sucrose, lactose, maltose or trehalose,
and wherein dextrin includes at least one member of the group comprising α-cyclodextrin, β-cyclodextrin, γ-cyclodextrin and dextrins of different molecular weights which are between 900 and 1,000,000 Dalton.
and wherein the saccharide derivatives are produced by acetatisation from the family of saccharides of high molecular weight, wherein cellulose, starch and glycogen are included.

2. A membrane as claimed in claim 1, **characterised in that** the membrane contains 10 to 50wt.% saccharide derivatives.

3. A membrane as claimed in claim 1 or 2, **characterised in that** the saccharide derivatives have structures of the formulae STR1, STR2 or STR3, which are as follows: 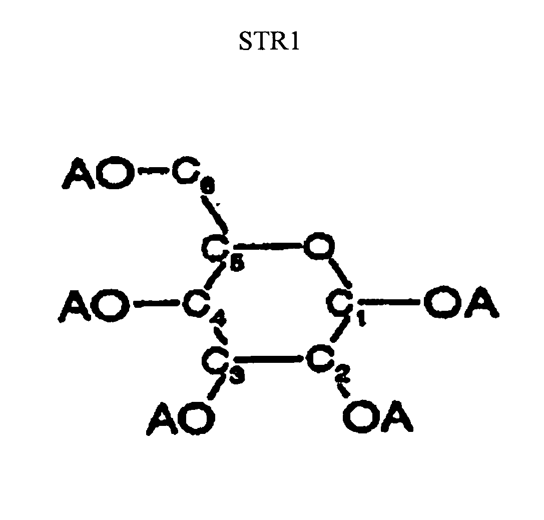 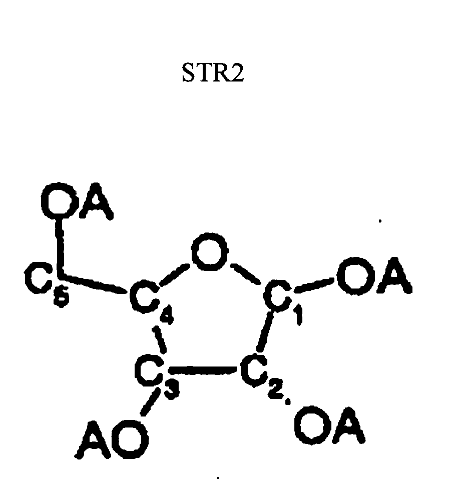 and 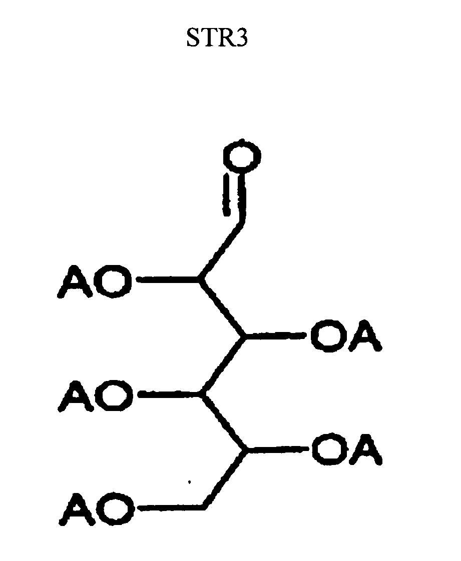 wherein A refers to hydrogen, a silyl-containing substance or an acetate-containing substance of the formulae STR4 or STR5, which are as follows 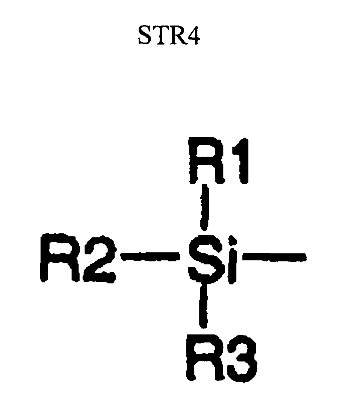 and 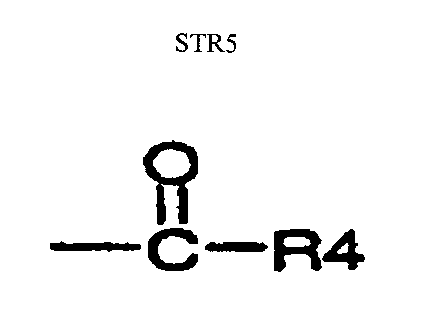 wherein R₁, R₂ and R₃ refers to hydrogen, an alkyl, alkenyl, aryl, alkylaryl, or arylalkyl with 1 to 10 carbon atoms and wherein R₄ refers to an alkyl, alkenyl, aryl, alkylaryl or arylalkyl with 1 to 10 carbon atoms.

4. A membrane as claimed in one of claims 1 to 3, **characterised in that** the monosaccharide derivatives bonded by means of glycoside bonds include C₁-C₄-,C₁-C₁, or C₁-C₆- bonds.

5. A membrane as claimed in one of claims I to 4, **characterised in that** the saccharide derivatives are produced up to 75 to 100wt.% from acetatisation or silylation, wherein the saccharide derivatives are homogeneously dissolved in an organic solvent with the homopolymer.

6. A membrane as claimed in one of claims 1 to 5, **characterised in that** the saccharide derivatives have a negligibly small vapour pressure and are at least temperature stable at above 100°C.

7. A membrane as claimed in one of claims 1 to 6, **characterised in that** the separation layer includes 5 to 60wt.% of saccharide derivatives.

8. A membrane as claimed in one of claims 1 to 7, **characterised in that** the carrier layer includes at least one member of the group comprising polysulphone, polyethersulphone, polyphenylsulphone, polyacrilonitrile, cellulose acetate, polyetherimide or polyimide, and, in particular, consists of one or more of these materials.

9. A method of manufacturing a membrane as claimed in one of claims 1 to 8, including the following steps:
- producing a homogeneous solution with the saccharide derivatives and the homopolymer in a suitable solvent,
- pouring the homogeneous solution on to the carrier layer.

10. A gas separation module including a membrane as claimed in one of claims 1 to 8.

11. A method of operating a gas separation module as claimed in claim 10 for oxygen enrichment.

## Revendications

1. Membrane de séparation de gaz, comprenant :
- une couche support poreuse en polymère ou en matériau inorganique, en particulier en matériau céramique,
- une couche de séparation, comprenant un mélange de dérivés de saccharides et un homopolymère, en particulier comprenant de l'éthylcellulose, de l'acétate de cellulose ou du poly-4-méthyl-1-pentène,
- dans laquelle les dérivés de saccharides présentent une structure cyclique à cinq ou six atomes dans le noyau ou une structure linéaire ou bien sont des dérivés de monosaccharides reliés par des ponts glycosidiques, le nombre des monosaccharides ainsi reliés allant de 2 à 1000,
- dans laquelle les dérivés de saccharides sont obtenus par silylation de la famille des saccharides ayant une structure cyclique à cinq ou six atomes dans le noyau ou une structure linéaire, ladite famille de saccharides comprenant le monosaccharose, le disaccharose, le trisaccharose ou la dextrine,
où le monosaccharose comprend au moins un membre du groupe constitué par les arabinose, lyxose, ribose, désoxyribose, xylose, ribulose, xylulose, allose, altose, galactose, glucose, gulose, idose, mannose, tagatose, fructose, mannoheptulose, sédoheptulose, octolose, 2-kéto-3-désoxy-manno-octonate et sialose,
et où le disaccharose comprend au moins un membre du groupe constitué par les saccharose, lactose, maltose ou tréhalose,
et où la dextrine comprend au moins un membre du groupe constitué par les α-cyclodextrine, β-cyclodextrine, γ-cyclodextrine et des dextrines de différentes masses moléculaires allant de 900 à 1 000 000 daltons,
et où les dérivés de saccharides sont obtenus par silylation de la famille des saccharides de masse moléculaire élevée, parmi lesquels la cellulose, l'amidon et le glycogène,
ou
- dans laquelle les dérivés de saccharides sont obtenus par acétatisation de la famille de saccharides ayant une structure cyclique à cinq ou six atomes dans le noyau ou une structure linéaire, ladite famille de saccharides comprenant le monosaccharose, le disaccharose, le trisaccharose ou la dextrine,
où le monosaccharose comprend au moins un membre du groupe constitué par les arabinose, lyxose, ribose, désoxyribose, xylose, ribulose, xylulose, allose, altose, galactose, glucose, gulose, idose, mannose, tagatose, fructose, mannoheptulose, sédoheptulose, octolose, 2-kéto-3-désoxy-manno- octonate et sialose,
et où le disaccharose comprend au moins un membre du groupe constitué par les saccharose, lactose, maltose ou tréhalose,
et où la dextrine comprend au moins un membre du groupe constitué par les α-cyclodextrine, β-cyclodextrine, γ-cyclodextrine et des dextrines de différentes masses moléculaires allant de 900 à 1 000 000 daltons,
et où les dérivés de saccharides sont obtenus par acétatisation de la famille des saccharides de masse moléculaire élevée, parmi lesquels l'amidon et le glycogène.

2. Membrane selon la revendication 1, **caractérisée en ce qu'**elle contient de 10 à 50% en masse de dérivés de saccharides.

3. Membrane selon la revendication 1 ou la revendication 2, **caractérisée en ce que** les dérivés de saccharides présentent des structures de formules STR1, STR2 ou STR3, où : 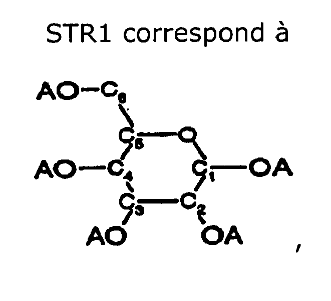 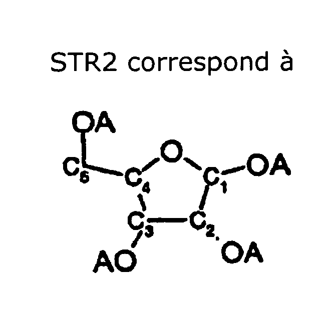 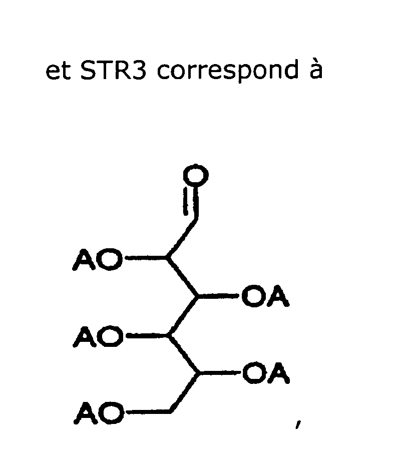 où A désigne l'hydrogène, une substance contenant des groupes silyle ou une substance contenant des groupes acétate de formules STR4 ou STR5, où 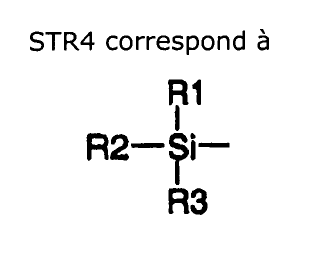 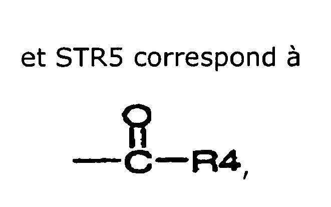 où R₁, R₂, R₃ désignent l'hydrogène ou un groupe alkyle, alcényle, aryle, alkylaryle ou arylalkyle de 1 à 10 atomes de carbone et R₄ désigne un groupe alkyle, alcényle, aryle, alkylaryle ou arylalkyle de 1 à 10 atomes de carbone.

4. Membrane selon l'une des revendications 1 à 3, **caractérisée en ce que** les dérivés de monosaccharides reliés par des ponts glycosidiques contiennent des liaisons C₁-C₄, C₁-C₁ ou C₁-C₆.

5. Membrane selon l'une des revendications 1 à 4, **caractérisée en ce que** les dérivés de saccharides sont obtenus à hauteur de 75 à 100% en masse par acétatisation ou silylation, les dérivés de saccharides étant dissous de manière homogène dans un solvant organique avec l'homopolymère.

6. Membrane selon l'une des revendications 1 à 5, **caractérisée en ce que** les dérivés de saccharides présentent une pression de vapeur négligeable et sont stables au minimum jusqu'à des températures supérieures à 100°C.

7. Membrane selon l'une des revendications 1 à 6, **caractérisée en ce que** la couche de séparation contient de 5 à 60% en masse de dérivés de saccharides.

8. Membrane selon l'une des revendications 1 à 7, **caractérisée en ce que** la couche support comprend au moins un membre du groupe constitué par les polysulfone, polyéthersulfone, polyphénylsulfone, polyacrylonitrile, acétate de cellulose, polyétherimide ou polyimide, en particulier se compose d'un ou plusieurs de ces matériaux.

9. Procédé de fabrication d'une membrane selon l'une des revendications 1 à 8, comprenant les étapes consistant à :
- préparer une solution homogène des dérivés de saccharides et de l'homopolymère dans un solvant approprié,
- couler la solution homogène sur la couche support.

10. Module de séparation de gaz comportant une membrane selon l'une des revendications 1 à 8.

11. Procédé d'exploitation d'un module de séparation de gaz selon la revendication 10 pour l'enrichissement en oxygène.
